(19) **Europäisches Patentamt / European Patent Office / Office européen des brevets**

(11) **EP 4 198 452 B1**

(12) **EUROPEAN PATENT SPECIFICATION**

(45) Date of publication and mention
of the grant of the patent:
**25.06.2025 Bulletin 2025/26**

(21) Application number: **20949919.3**

(22) Date of filing: **21.08.2020**

(51) International Patent Classification (IPC):
**G01C 21/36** *(2006.01)*  **G06F 16/29** *(2019.01)*
**G06F 16/23** *(2019.01)*  **G01C 21/00** *(2006.01)*

(52) Cooperative Patent Classification (CPC):
**G06F 16/23; G01C 21/3602; G01C 21/3841;
G06F 16/29; G06V 20/54; G06V 20/56;
G08G 1/0112; G08G 1/0116; G08G 1/0129;
G08G 1/0141; G08G 1/096775; H04L 67/10;
H04L 67/12; H04L 67/52; H04W 4/38;**      (Cont.)

(86) International application number:
**PCT/CN2020/110598**

(87) International publication number:
**WO 2022/036711 (24.02.2022 Gazette 2022/08)**

(54) **MAP UPDATE METHOD AND RELATED UPDATE APPARATUS**

KARTENAKTUALISIERUNGSVERFAHREN UND ZUGEHÖRIGE
AKTUALISIERUNGSVORRICHTUNG

PROCÉDÉ DE MISE À JOUR DE CARTE ET APPAREIL DE MISE À JOUR ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.06.2023 Bulletin 2023/25**

(73) Proprietor: **Shenzhen Yinwang Intelligent
Technologies Co., Ltd.
Shenzhen, Guangdong 518129 (CN)**

(72) Inventor: **LIU, Jianqin
Shenzhen, Guangdong 518129 (CN)**

(74) Representative: **Maiwald GmbH
Elisenhof
Elisenstraße 3
80335 München (DE)**

(56) References cited:
**WO-A1-2019/090417      WO-A2-2018/142394
CN-A- 105 973 245       CN-A- 107 544 515
CN-A- 110 287 276       CN-A- 110 715 655
CN-A- 111 108 538       CN-A- 111 339 228**

**(Cont. next page)**

(52) Cooperative Patent Classification (CPC): (Cont.)
**H04W 4/44**

## Description

## TECHNICAL FIELD

This application relates to the field of intelligent driving technologies, and more specifically, to a map update method and a related update apparatus.

## BACKGROUND

When an intelligent driving vehicle (for example, an unmanned vehicle) travels, an electronic map needs to provide precise information about a driving environment to ensure safety of the intelligent driving vehicle. However, an actual driving environment frequently changes. Therefore, the electronic map needs to be updated in time to ensure precision of the electronic map, so as to ensure safe driving of the intelligent driving vehicle.

Currently, in the field of intelligent driving technologies, a crowdsourcing-based method is proposed for electronic map update. The method includes: A crowdsourcing vehicle collects data of a driving scenario, and reports the collected data to a cloud server. The cloud server collects a large amount of data collected by the vehicle, and processes the data collected by the vehicle, to obtain a changed map element and a location of the changed map element on an electronic map, so as to determine map information that needs to be updated, and update the electronic map.

Compared with a conventional map information collection method, the foregoing method reduces data collection costs, but requires a large quantity of communication resources between the vehicle and the cloud server to transmit the data collected by the vehicle. Therefore, how to update an electronic map in the crowdsourcing mode by using fewer communication resources is an urgent technical problem to be resolved.

WO 2018/142394 A2 describes computer aided driving, wherein a sensor of the vehicle senses an environment of the vehicle comprising a dynamic object.

## SUMMARY

The invention is defined by the independent claims. Further embodiments are defined in the dependent claims. This application provides a map update method and a related apparatus, to reduce resources for transmitting, between a terminal side device and a cloud device, related data used to update map information.

According to a first aspect, this application provides a map update method performed by a terminal side device, as defined in claim 1.

The method includes: receiving sensing information from a sensor, where the sensing information indicates data collected by the sensor; and sending first information to a cloud device based on the sensing information, where the first information includes first indication information, and the first indication information indicates change information of a map element at a first location on a target map.

According to the method, the terminal side device no longer reports, to the cloud device, the data collected by the sensor, but reports a change status of a map element on the target map. Because much fewer transmission resources are used for reporting the change status of the map element on the target map than reporting the data collected by the sensor, the method in this application can save transmission resources.

From another perspective, in the method of this application, map information may be updated by using fewer transmission resources. Therefore, the method of this application may be used not only in a scenario in which transmission resources are not limited, but also in a scenario in which transmission resources are limited, so that more terminal side devices can report more map element change statuses, to improve precision of an updated target map.

In addition, in this method, the terminal side device or a chip of the terminal side device learns a change status of a map element on the target map based on the data collected by the sensor. Compared with performing an operation by the cloud device, this method shares a large part of workload of the cloud device to each terminal side device, and therefore complexity of crowdsourcing-based map update performed on a cloud side can be reduced and map update efficiency can be improved. In this way, latest map information can be obtained in a timely manner, and driving safety of a vehicle can be improved.

With reference to the first aspect, in a first possible implementation, the first information may further include first confidence information, and the first confidence information indicates a first confidence of the first indication information.

In other words, when the change status of the map element at the first location is indicated to the cloud device, a confidence of the change status is further indicated, so that the cloud device can update the target map based on the confidence, to improve map update precision.

With reference to the first aspect or the first possible implementation, in a second possible implementation, the first information further includes first confidence radius information, the first confidence radius information indicates a first confidence radius, the first confidence radius is the maximum distance of the horizontal and vertical distances between the first location and two closest reference locations on the target map, wherein the horizontal and the vertical coordinates of the two reference locations are located on two sides of the first location, and the reference location is a location of a preset reference map element on the target map.

In this implementation, when the change status of the map element at the first location on the target map is reported to the cloud device, the corresponding first confidence radius is further reported, so that the cloud device can determine, based on the first confidence radius, whether a map element involved in a map element change status reported by another terminal side device and the map element at the first location are a same map element. This can prevent the cloud device from mistaking the map element reported by the another terminal side device as the map element at the first location, to further prevent the cloud device from updating the map element at the first location by using incorrect information, to finally improve precision of updating the map element at the first location. In this way, when the target map is updated based on the first indication information, precision of the updated target map can be improved, and driving safety of the vehicle can be improved.

With reference to the first aspect, according to the invention, the method further includes: receiving second information from the cloud device, where the second information includes second indication information, the second indication information indicates change information of a map element at a second location on the target map, and the second location is adjacent to the first location.

The sending first information to a cloud device may include: sending the first information to the cloud-side device based on the second information.

In other words, the first information reported to the cloud device is an update of the second information delivered by the cloud device. From another perspective, in this implementation, related information of a same changed map element may be updated by using a plurality of terminal side devices or by performing detection by a terminal side device for a plurality of times, so that the cloud device can obtain more precise related information of the same changed map element, and the cloud device can obtain more precise map information when updating the target map based on the related information of the map element.

With reference to the first aspect, according to the invention, the second information further includes second confidence radius information, the second confidence radius information indicates a second confidence radius, the second confidence radius is the maximum distance of the horizontal and vertical distances between the second location and two closest reference locations on the target map, wherein the horizontal and the vertical coordinates of the two reference locations are located on two sides of the second location, and the reference location is a location of a preset reference map element on the target map.

The sending the first information to the cloud device based on the second information includes: sending the first information to the cloud device when the first location is located in a circular area with the second location as the center and the second confidence radius as the radius.

In this implementation, whether a first map element indicated by the second indication information and a first map element detected by the terminal side device are a same map element is determined based on the second confidence radius, to improve precision, and improve precision of an updated target map.

In a further possible implementation, the second information further includes second confidence information, and the second confidence information indicates a second confidence of the second indication information.

The sending the first information to the cloud device based on the second information includes: sending the first information to the cloud device when the first confidence is greater than the second confidence.

In other words, the first information reported by the terminal side device to the cloud device is an update of the second information delivered by the cloud device, and an updated change status is reported to the cloud device only when a confidence of the updated change status is greater than a confidence of the unupdated change status.

From another perspective, in this implementation, related information of a same changed map element may be updated by using a plurality of terminal side devices or by performing detection by a terminal side device for a plurality of times, so that the cloud device can obtain more precise related information of the same changed map element. In addition, more precise updated information is ensured, so that the cloud device can obtain more precise map information when updating the target map based on the related information of the map element.

With reference to the first aspect or any one of the foregoing possible implementations, in a further possible implementation, when the first confidence of the first indication information is greater than or equal to a first preset confidence threshold, the first information further includes first acknowledgment information, and the first acknowledgment information indicates that the first indication information is reliable.

In this implementation, when determining that the change status of the first map element is reliable, the terminal side device reports the information to the cloud device, to notify the cloud device that map information can be directly updated based on the first information, to improve update efficiency.

In this implementation, when determining that the confidence of the map element at the first location changes to a confidence that is of the first map element and that is greater than or equal to the preset threshold, the terminal side device considers that the map element at the first location changes to the confidence of the first map element. In this way, reliability of the first information can be ensured, and map update precision can be improved.

In a further possible implementation, the first confidence threshold may be a preset threshold, or may be a threshold preset based on configuration information sent by the cloud device.

In a further possible implementation, the method is performed by a vehicle or a chip used in a vehicle, and the method further includes: when the first confidence is less than a second preset confidence threshold, sending the first indication information and the first confidence information to a roadside unit, where the first confidence information indicates the first confidence.

In this implementation, when the first confidence is less than the second preset confidence threshold, the first indication information and the first confidence information are sent to the roadside unit, so that the roadside unit further detects a change status of the first map element based on these information, to obtain more precise change information.

The second confidence threshold may be a preset threshold, or may be a threshold preset based on configuration information sent by the cloud device.

From another perspective, the vehicle and the roadside unit cooperate with each other to update map information, so that respective advantages of the vehicle and the roadside unit can be fully utilized to implement map update. In addition, considering limitation of a channel transmission resource, especially an uplink transmission resource, cooperative work of the vehicle and the roadside unit can avoid repeated transmission of same information, so that utilization of channel resources of the vehicle and the roadside unit can be improved.

With reference to any one of the first aspect or the foregoing possible implementations, in some possible implementations, the first indication information includes first location information, and the first location information indicates the first location, or the first location information indicates the first location and a third confidence radius with the first location as the center.

With reference to any one of the first aspect or the foregoing possible implementations, in some possible implementations, the first location information includes absolute location information, or the first location information includes offset information of the first location relative to the second location, or the first location information includes location information of one or more reference map elements on the target map and offset information of the first location relative to a location of each reference map element.

According to a second aspect, this application provides a map update method performed by a cloud device, as defined in claim 7. The method includes: receiving first information from a first terminal side device, where the first information includes first indication information, and the first indication information indicates change information of a map element at a first location on a target map; and updating the target map based on the first information.

With reference to the second aspect, in a first possible implementation, the first information may further include first confidence information, and the first confidence information indicates a first confidence of the first indication information.

In other words, when a change status of the map element at the first location is indicated to the cloud device, a confidence of the change status is further indicated, so that the cloud device can update the target map based on the confidence, to improve update precision.

In this implementation, in an example, the first confidence is less than a preset confidence threshold, and the first terminal side device is a roadside unit.

With reference to the second aspect or the first possible implementation, in a second possible implementation, the first information may further include first confidence radius information, the first confidence radius information indicates a first confidence radius, the first confidence radius is the maximum distance of the horizontal and vertical distances between the first location and two closest reference locations on the target map, wherein the horizontal and the vertical coordinates of the two reference locations are located on two sides of the first location, and the reference location is a location of a preset reference map element on the target map.

With reference to the second aspect, according to the invention, before the receiving first information from a first terminal side device, the method further includes: obtaining second information, where the second information includes second indication information, and the second indication information indicates change information of a map element at a second location on the target map; and sending the second information to the first terminal side device.

Generally, a location relationship between the first location and the second location meets a first preset condition. For example, a distance between the first location and the second location is less than or equal to a preset distance threshold.

In other words, the first information reported by the terminal side device to the cloud device is an update of the second information delivered by the cloud device. In this way, precision of change information of a first map element can be improved, to improve precision of the updated target map.

With reference to the second aspect, according to the invention, the second information may further include second confidence radius information, the second confidence radius information indicates a second confidence radius, the second confidence radius is the maximum distance of the horizontal and vertical distances between the second location and two closest reference locations on the target map, wherein the horizontal and the vertical coordinates of the two reference locations are located on two sides of the second location, and the reference location is a location of a preset reference map element on the target map.

In a further possible implementation, the second information may further include second confidence information, and the second confidence information indicates a second confidence of the second indication information

information.

In a further possible implementation, when the first confidence of the first indication information is greater than or equal to a first preset confidence threshold, the first information further includes first acknowledgment information, and the first acknowledgment information indicates that the first indication information is reliable.

Optionally, the first terminal side device may be a vehicle.

In a further possible implementation, the first confidence threshold may be a threshold preset by the terminal side device, or may be a threshold preset based on configuration information sent by the cloud device.

With reference to any one of the second aspect or the foregoing possible implementations, in a further possible implementation, the first indication information includes first location information, and the first location information indicates the first location, or the first location information indicates the first location and a third confidence radius with the first location as the center.

In a further possible implementation, the first location information includes absolute location information, or the first location information includes offset information of the first location relative to the second location, or the first location information includes location information of one or more reference map elements on the target map and offset information of the first location relative to a location of each reference map element.

According to a third aspect, this application provides a map update apparatus. The apparatus includes modules configured to perform the method according to any one of the first aspect or the implementations of the first aspect.

According to a fourth aspect, this application provides a map update apparatus. The apparatus includes modules configured to perform the method according to any one of the second aspect or the implementations of the second aspect.

According to a fifth aspect, this application provides a map update apparatus. The apparatus includes: a memory, configured to store a program; and a processor, configured to execute the program stored in the memory. When the program stored in the memory is executed, the processor is configured to perform the method according to any one of the first aspect or the implementations of the first aspect.

According to a sixth aspect, this application provides a map update apparatus. The apparatus includes: a memory, configured to store a program; and a processor, configured to execute the program stored in the memory. When the program stored in the memory is executed, the processor is configured to perform the method according to any one of the second aspect or the implementations of the second aspect.

According to a seventh aspect, a computer-readable medium is provided. The computer-readable medium stores program code to be executed by a device, and the program code is used to perform the method according to any one of the first aspect or the implementations of the first aspect.

According to an eighth aspect, a computer-readable medium is provided. The computer-readable medium stores program code to be executed by a device, and the program code is used to perform the method according to any one of the second aspect or the implementations of the second aspect.

According to a ninth aspect, a computer program product including instructions is provided. When the computer program product is run on a computer, the computer is enabled to perform the method according to any one of the first aspect or the implementations of the first aspect.

According to a tenth aspect, a computer program product including instructions is provided. When the computer program product is run on a computer, the computer is enabled to perform the method according to any one of the second aspect or the implementations of the second aspect.

According to an eleventh aspect, a chip is provided. The chip includes a processor and a data interface. The processor reads, through the data interface, instructions stored in a memory, to perform the method according to any one of the first aspect or the implementations of the first aspect.

Optionally, in an implementation, the chip may further include the memory. The memory stores the instructions, the processor is configured to execute the instructions stored in the memory, and when executing the instructions, the processor is configured to perform the method according to any one of the first aspect or the implementations of the first aspect.

According to a twelfth aspect, a chip is provided. The chip includes a processor and a data interface. The processor reads, through the data interface, instructions stored in a memory, to perform the method according to any one of the second aspect or the implementations of the second aspect.

Optionally, in an implementation, the chip may further include the memory. The memory stores the instructions, the processor is configured to execute the instructions stored in the memory, and when executing the instructions, the processor is configured to perform the method according to any one of the second aspect or the implementations of the second aspect.

According to a thirteenth aspect, a computing device is provided. The computing device includes: a memory, configured to store a program; and a processor, configured to execute the program stored in the memory. When the program stored in the memory is executed, the processor is configured to perform the method according to any one of the first aspect or the implementations of the first aspect.

According to a fourteenth aspect, a computing device is provided. The computing device includes: a memory, configured to store a program; and a processor, configured to execute the program stored in the memory.

When the program stored in the memory is executed, the processor is configured to perform the method according to any one of the second aspect or the implementations of the second aspect.

According to a fifteenth aspect, a vehicle is provided. The vehicle includes: a memory, configured to store a program; and a processor, configured to execute the program stored in the memory. When the program stored in the memory is executed, the processor is configured to perform the method according to any one of the first aspect or the implementations of the first aspect.

According to a sixteenth aspect, a roadside unit is provided. The roadside unit includes: a memory, configured to store a program; and a processor, configured to execute the program stored in the memory. When the program stored in the memory is executed, the processor is configured to perform the method according to any one of the first aspect or the implementations of the first aspect.

It may be understood that, in the solutions provided in this application, the computing device is a device that can be abstracted as a computer system. The map update apparatus in this application may be the entire computing device, or may be some components in the computing device, for example, a chip having a computing function, such as a system chip. Optionally, the map update apparatus in this application may further include a wireless communication apparatus. The wireless communication apparatus may be an entire computing device that supports a wireless communication function, or may be some components in the entire device, for example, a communication chip having a wireless communication function.

The system chip is also referred to as a system on chip, or is referred to as a system on chip (system on chip, SoC). The communication chip may include a radio frequency processing chip and a baseband processing chip. The baseband processing chip is sometimes referred to as a modem (modem). In physical implementation, the communication chip may be integrated into a SoC chip, or may not be integrated into a SoC chip. For example, the baseband processing chip is integrated into the SoC chip, and the radio frequency processing chip is not integrated into the SoC chip.

In an example, the map update apparatus may be a computing device such as a terminal side device, or may be a system chip that can be disposed in a terminal side device.

It may be understood that, in the solutions provided in this application, unless otherwise specified, the memory is usually a main memory of a computer system. The main memory is configured to temporarily store related data and a program instruction that are used when a processor runs a program. The main memory is usually a DRAM, or may be an SRAM or another memory that can provide a function same as or similar to that of a DRAM or an SRAM.

## BRIEF DESCRIPTION OF DRAWINGS

FIG. 1 is a schematic diagram of an application scenario of a map update method according to this application;
FIG. 2 is a schematic flowchart of a map update method according to an embodiment of this application;
FIG. 3 is a flowchart of an example of a map update method according to another embodiment of this application;
FIG. 4 is a flowchart of an example of a map update method according to still another embodiment of this application;
FIG. 5 is a schematic diagram of a structure of a map update apparatus according to an embodiment of this application;
FIG. 6 is a schematic diagram of a structure of a map update apparatus according to another embodiment of this application;
FIG. 7 is a schematic diagram of a structure of a computer program product according to an embodiment of this application; and
FIG. 8 is a schematic diagram of a structure of an apparatus according to another embodiment of this application.

## DESCRIPTION OF EMBODIMENTS

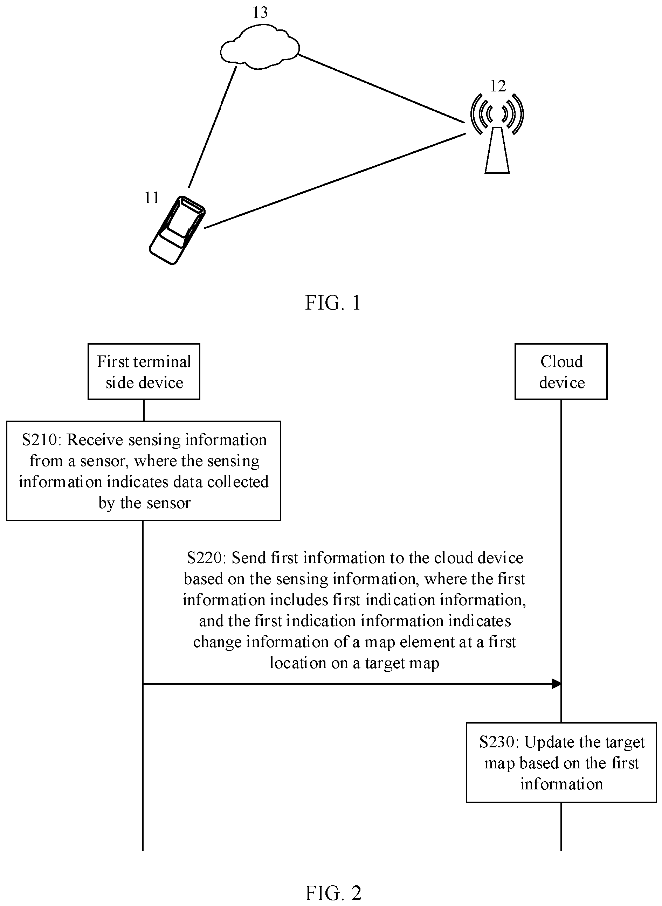

FIG. 1 is a schematic diagram of an application scenario of a map update method according to an embodiment of this application. As shown in FIG. 1, the example application scenario may include a vehicle 11, a roadside unit 12, and a cloud device 13. The vehicle 11 or the roadside unit 12 may be referred to as a terminal side device, and the cloud device may also be referred to as a cloud server or a server.

The roadside unit 12 and the cloud device 13 may communicate with each other, for example, through a communications network such as the internet, wireless-fidelity (wireless-fidelity, Wi-Fi), or a cellular network.

The vehicle 11 and the cloud device 13 may also communicate with each other. For example, the vehicle 11 and the cloud device 13 may communicate with each other in a conventional vehicle to everything (vehicle to everything, V2X) communication manner. Optionally, the vehicle 11 may directly communicate with the cloud device 13, for example, through a communication network. Optionally, the vehicle 11 may alternatively communicate with the cloud device 13 through the roadside unit 12. Optionally, the vehicle 11 may directly communicate with the cloud device 13, or may communicate with the cloud device 13 through the roadside unit 12.

The vehicle 11 and the roadside unit 12 may communicate with each other through a communication network such as the internet, Wi-Fi, or a cellular network.

It should be noted that the application scenario shown in FIG. 1 is merely a schematic diagram of an example application scenario according to an embodiment of this application, and the devices shown in FIG. 1 and relationships between the devices do not constitute any limitation. In some other example application scenarios of this embodiment of this application, the roadside unit 12 may not be included.

In embodiments of this application, both a vehicle and a roadside unit may be referred to as a terminal side device. The terminal side device may be understood as a device having a computing function on a terminal side, or the terminal side device may be a computing device on a terminal side. The cloud device may be understood as a computing device on a cloud side.

FIG. 2 is a schematic flowchart of a map update method according to an embodiment of this application. As shown in FIG. 2, the method may include S210, S220, and S230.

S210: A first terminal side device receives sensing information from a sensor, where the sensing information indicates data collected by the sensor.

In this embodiment, the sensor on the first terminal side device may collect data in a driving scenario in which the terminal side device is located. For ease of description, the data collected by the sensor is referred to as sensor data, and information used to indicate the sensor data is referred to as sensing information. The sensing information may be directly the sensor data, or may be information obtained after the sensor data is further processed. In an example, the sensor data may include raw data collected by each sensor, for example, an image collected by a camera, point cloud data collected by a laser radar or a millimeter-wave radar, and sound wave data collected by an ultrasonic wave.

In another example, the sensor data may also include target data sensed by the sensor, for example, traffic light information sensed by a camera, lane line information sensed by a laser radar, or lamp pole information obtained by a plurality of sensors through merging. This is not specifically limited herein. Alternatively, the sensor data may include feature data obtained by the sensor through processing, for example, a visual feature obtained by a camera by processing collected raw image data, or a key point cloud feature obtained by a laser radar by processing collected raw point cloud data.

S220: The first terminal side device sends first information to a cloud device based on the sensing information, where the first information includes first indication information, and the first indication information indicates change information of a map element at a first location on a target map. Correspondingly, the cloud device may receive the first information from the terminal side device.

After obtaining the sensing information, the first terminal side device generates the first information based on the data collected by the sensor. The first information includes the first indication information, and the first indication information indicates the change information of the map element at the first location on the target map.

The first terminal side device may be any terminal side device. The terminal side device in this embodiment may be a vehicle, a roadside unit, or another device that can collect data of a driving scenario and determine a change status of a map element on the target map based on the data of the driving scenario.

The target map may be an electronic map pre-stored on the first terminal side device or the cloud device. The target map includes a map element, or the map element is content of the target map.

When current map elements on the target map are compared with historical map elements on the target map, and the map element at the first location changes, the first terminal side device may generate the first indication information, to indicate that the map element at the first location changes and indicate a change status of the map element at the first location, for example, indicate type information of the changed map element at the first location.

The map elements in this embodiment may include map elements of one or more types of a road, a traffic light, a lane line, a road sign, and a ground sign. A map element of the road type may include one or more types of a guardrail or a road edge. A map element of the road sign type may include one or more types of a road mark, an indicative sign, or a height limit sign. The ground sign may include one or more types of signs such as a traffic distribution sign, an entrance/exit sign, a speed limit sign, and a time limit sign. The foregoing map elements are merely examples, and shall not constitute a limitation on the method in this embodiment.

After collecting the data, the sensor on the first terminal side device may detect, based on the sensor data, a map element in a current driving scenario of the terminal side device and a location of the map element. For ease of subsequent description, in this embodiment, a map element detected by the sensor is referred to as an actual map element in the driving scenario corresponding to the sensor data. It may be understood that the current driving scenario and the driving scenario corresponding to the sensor data herein are a driving scenario in which the terminal side device is located when the sensor collects the sensor data. It should be understood that the driving scenario herein may be an intersection, a lane, a parking lot, or the like. This is not specifically limited herein.

After detecting the actual map element in the driving scenario, the first terminal side device may obtain a map element that is recorded in the target map and that is included in the driving scenario. For subsequent description, in this embodiment, a map element recorded in the target map is referred to as a historical map element.

After obtaining actual map elements and historical map elements of a same driving scenario, the first terminal side device may detect, based on the actual map elements and the historical map elements, changed map elements in the driving scenario and locations at which the map elements change. A change of a map element includes addition and disappearance of the map element, a location change of the map element, a change of an association relationship of the map element, a change of another attribute of the map element, and the like. In this embodiment, for ease of description, a location at which a map element changes is referred to as a first location, an actual map element at the first location is referred to as a first map element, and a historical map element at the first location is referred to as a second map element.

In an example, for a location of each actual map element, the first terminal side device may detect whether a same historical map element exists at the location on the target map. If no, it may be determined that the map element at the location changes, and the location is the first location.

For example, if the first terminal side device detects, based on first data, that there is a traffic light at a location, but there is no traffic light at the location on the target map, the first terminal side device may determine that a map element at the location changes, that is, a traffic light may be newly added at the location on the target map.

After determining, based on the sensor data, that the map element at the first location on the target map changes, the first terminal side device may generate the first indication information, to indicate the change status of the map element at the first location on the target map.

In an example, the first indication information may specifically indicate the change information of the map element at the first location. The change information of the map element herein includes addition and disappearance of the map element, a location change of the map element, a change of an association relationship of the map element, a change of another attribute of the map element, and the like. The another attribute of the map element may include a color, a geometric shape, a size, and the like of the map element.

S230: The cloud device updates the target map based on the first information.

In this embodiment, after obtaining the sensor data, the terminal side device does not directly send the sensor data to the cloud device, and the cloud device does not update the target map based on the sensor data. Instead, the terminal side device first processes the sensor data, and after learning a change status of a map element on the target map, the terminal side device directly reports the change status of the map element on the target map to the cloud device. In this way, an amount of data reported by the terminal side device to the cloud device can be reduced, so that communication resources between the terminal side device and the cloud device can be saved. In addition, computing resources and computing duration for the cloud device to learn the change status of the map element on the target map based on the sensor data can be saved, and computing complexity and computing load of the cloud device can be reduced, to improve map update efficiency of the cloud device.

In some possible implementations of this embodiment, the first indication information may include first location information, and the first location information indicates the first location of the first map element, or the first location information may indicate the first location and a third confidence radius with the first location as the center.

Optionally, the first location information is absolute location information, or the first location information is offset information of the first location relative to a second location, or the first location information is location information of one or more reference map elements on the target map and offset information of the first location relative to a location of each reference map element.

In an example of the first location information, the first location information may include location information of one or more historical map elements near the first location on the target map and a location offset of the first location relative to each of the one or more historical map elements. In other words, the first location may be indicated by using the location information of the one or more historical map elements on the target map and the corresponding location offsets.

For example, the first location information may include location information of a map element that is closest to the first location in four directions of the first location on the target map, namely, the south, the east, the west, and the north, and a location offset of the first location relative to the closest map element in each direction.

An example of updating, by the cloud device, the target map based on the first information is as follows: The cloud device sends map update information to one or more terminal side devices. The map update information indicates the terminal side device to update the change information of the map element at the first location.

In an implementation of this embodiment, after determining the change information of the map element at the first location, the first terminal side device may obtain a first confidence of the change information of the map element at the first location on the target map, and send first confidence information to the cloud device. The first confidence information indicates the first confidence. In this embodiment, the confidence is also referred to as a confidence level.

To obtain the first confidence, the first terminal side device may introduce a generalized confidence to define a reliability of a change of the map element at the first location that is determined based on the sensor data. A generalized confidence is an approximate estimation of a confidence, or is a monotonically increasing function of the confidence, and a meaning is that the generalized confidence can be compared based on an actual observation value of a target and a true result of the target.

It is assumed that a classifier L has a confidence function HL(x), and any two points in feature space of the classifier L are X1 and X2. If a function f(x) exists, f(X1) >f(X2) always exists when HL(X1)>HL(X2), and an inverse theorem is also true, f(x) is a generalized confidence of the classifier L.

For example, hypothesis space of a map element change detected at a location includes four cases: a map element changes, a map element does not change, a map element changes or does not change (a case in which an exact value is not determined), and null (that is, determining cannot be performed). In this case, a confidence of an assumption may be calculated according to a confidence function.

When the first information includes the first confidence information, in an implementation, that the cloud device updates the target map based on the first information may include: The cloud device sends map update information to one or more terminal side devices when determining that the first confidence is greater than or equal to a preset confidence threshold. The map update information indicates the terminal side device to update the map element at the first location to the first map element.

In another implementation of this embodiment, after obtaining the first confidence, the first terminal side device may determine whether the first confidence is greater than or equal to the preset confidence threshold. If yes, the first information may include first acknowledgment information, and the first acknowledgment information indicates that the first indication information is reliable. In this case, the first information may not include the first confidence information.

In this implementation, after receiving the first information, the cloud device may determine, based on the first acknowledgment information, that the first indication information is reliable, so that the cloud device can send map update information to one or more terminal side devices. The map update information indicates the terminal side device to update the map element at the first location to the first map element.

In some possible implementations of this embodiment, the first information may further include first confidence radius information, the first confidence radius information indicates a first confidence radius, the first confidence radius is the maximum distance of the horizontal and vertical distances between the first location and two closest reference locations on the target map, wherein the horizontal and the vertical coordinates of the two reference locations are located on two sides of the first location, and the reference location is a location of a preset reference map element on the target map.

In an example, the first terminal side device may obtain the first confidence radius according to the following formula:

$$\max_{\{|x-a|,|x-b|\}} \{P(a < x < b \mid a,b) = Threshold1\}$$

$$\max_{\{|y-c|,|y-d|\}} \{P(c < y < d \mid c,d) = Threshold2\}$$

$$r = \max\{|x-b|, |x-a|, |y-c|, |y-d|\}$$

*Threshold*2 and *Threshold*1 are preset thresholds, and values of *Threshold*2 and *Threshold*1 may be the same or different. *x* and *y* are respectively the horizontal coordinate and the vertical coordinate of the first location. *a* and *C* are respectively a horizontal coordinate and a vertical coordinate of a reference map element on the target map. For ease of description, the reference map element may be referred to as a first reference map element. *b* and *d* are respectively a horizontal coordinate and a vertical coordinate of another reference map element on the target map. For ease of description, the reference map element may be referred to as a second reference map element. $\max_{\{|x-a|,|x-b|\}} \{P(a < x < b \mid a,b) = Threshold1\}$ represents a maximum horizontal coordinate distance difference of map elements at the first location when a confidence of a horizontal coordinate of the map element at the first location between the first reference map element and the second reference map element is greater than or equal to a first threshold. The horizontal coordinate of the first reference map element and the horizontal coordinate of the second reference map element are located on two sides of the first location. $\max_{\{|y-c|,|y-d|\}} \{P(c < y < d \mid c,d) = Threshold2\}$ represents a maximum vertical coordinate distance difference of map elements at the first location when a confidence of a vertical coordinate of the map element at the first location between the first reference map element and the second reference map element is greater than or equal to a second threshold. The vertical coordinate of the first reference map element and the vertical coordinate of the second reference map element are located on two sides of the first location. $r = \max\{|x-b|, |x-a|, |y-c|, |y-d|\}$ indicates that *r* is a maximum value in $|x-b|$, $|x-a|$, $|y-c|$, and $|y-d|$, and *r* is the first confidence radius. $|\cdot|$ represents an absolute value operation.

In this embodiment, values of *Threshold*2 and *Threshold*1 may be set according to a user's requirement for map precision. In most cases, a higher requirement for map precision indicates smaller values of *Threshold*2 and *Threshold*1.

When the first information includes the first confidence radius, an example in which the cloud device updates the target map based on the first information includes: The cloud device updates the target map based on the first confidence radius and a confidence radius received by the cloud device from at least one another terminal side device.

For example, the cloud device may receive, from a plurality of terminal side devices, a change status that is of a map element on the target map and that is detected by each terminal side device, and the plurality of terminal side devices include the first terminal side device. The cloud device may find, based on a confidence radius reported by each terminal side device, information that is reported by a terminal side device and that describes a change status of a same map element, so that more precise change information can be obtained for the map element based on the information, to improve precision of the target map obtained by the cloud device by updating based on the change information of the map element.

It may be understood that the method shown in FIG. 2 is described by using the terminal side device and the cloud device as execution bodies. However, execution bodies of the method shown in FIG. 2 are not limited to the terminal side device and the cloud device. For example, any execution body in the method shown in FIG. 2 may be a chip. In an example, in the manner shown in FIG. 2, the terminal side device may be replaced with a chip that can be used in the terminal side device, and the cloud device may be replaced with a chip that can be used in the cloud device.

In this embodiment, optionally, when the first information includes a plurality of types of information, for example, includes at least two of the first indication information, the first confidence radius information, the first confidence information, and the first acknowledgment information, the plurality of types of information included in the first information may be carried in a same message, or may be carried in different messages, or may be partially carried in a same message.

In other words, when the first terminal side device sends at least two types of information of the first indication information, the first confidence radius information, the first confidence information, and the first acknowledgment information to the cloud device, the first terminal side device may send the at least two types of information by using one message, or may send the at least two types of information by using a plurality of messages.

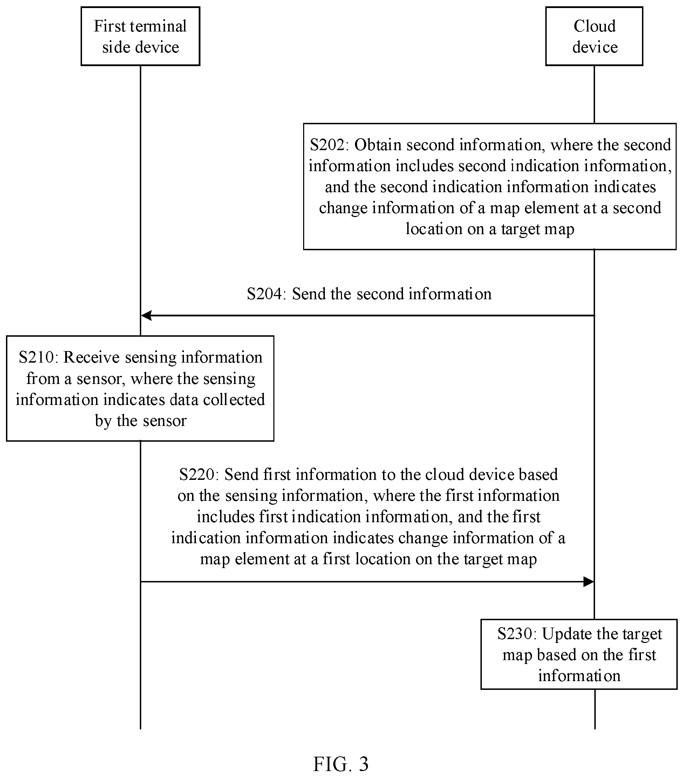

FIG. 3 is a flowchart of an example of a map update method according to another embodiment of this application. As shown in FIG. 3, before S230, the method in this embodiment may include S202 and S204. Correspondingly, S220 may include S222.

S202: The cloud device obtains second information, where the second information includes second indication information, and the second indication information indicates change information of a map element at a second location on the target map.

The second indication information includes second location information, and the second location information indicates the second location. The second location information may indicate the second location by using a location of a reference map element on the target map and a second location offset of the first map element relative to the reference map element.

In an implementation of this step, that the cloud device obtains second information may include: The cloud device receives the second information from another terminal side device. For ease of description, in this embodiment, the another terminal side device is referred to as a second terminal side device.

In other words, the cloud device may directly send, to the first terminal side device, the second information received from the second terminal side device, and the first terminal side device updates the change information of the first map element.

For a method for generating and sending the second information by the second terminal side device, refer to a method for generating and sending the first information by the first terminal side device. Details are not described herein again.

S204: The cloud device sends the second information to the first terminal side device. Correspondingly, the first terminal side device receives the second information from the cloud device.

S205: The first terminal side device receives the data collected by the sensor.

S210: The first terminal side device determines the first information based on the data.

S222: The first terminal side device sends the first information to the cloud device based on the second information.

For example, after learning that the map element at the first location changes to the first map element, the first terminal side device may determine whether the first location and the second location meet a first preset condition. The first terminal side device sends the first information when the first preset condition is met.

An example of the first preset condition includes: A distance from the first location to the second location is less than or equal to a preset value. For example, the terminal side device sends the first information only when the distance between the second location and the first location is less than or equal to a preset distance threshold. Another example of the first preset condition includes: A confidence of the first location is greater than a confidence of the second location. For example, the terminal side device sends the first information only when determining that the confidence of the first location is relatively large.

In this embodiment, the first terminal side device updates the change information of the first map element sent by the cloud device, to obtain more precise change information of the first map element, to improve precision of the target map obtained by the cloud device by updating based on the first information.

According to the invention, the second information includes second confidence radius information, the second confidence radius information indicates a second confidence radius, the second confidence radius is the maximum distance of the horizontal and vertical distances between the second location and two closest reference locations on the target map, wherein the horizontal and the vertical coordinates of the two reference locations are located on two sides of the second location, and the reference location is a location of a preset reference map element on the target map.

For a method for obtaining the second confidence radius, refer to the method for obtaining the first confidence radius by the first terminal side device. Details are not described herein again.

The first preset condition includes: The first location is located in a circular area with the second location as the center and the second confidence radius as the radius.

In other words, only when the first location is located in the circular area with the second location as the center and the second confidence radius as the radius, the terminal side device determines that the first map element detected by the first terminal side device and the first map element indicated by the second information is a same map element, and sends the first information. This helps improve precision of map update information, and further helps improve precision of the updated target map.

In another implementation of this embodiment, the second information may further include second confidence information, and the second confidence information indicates a second confidence of the second indication information.

For a manner for obtaining the second confidence, refer to the manner for obtaining the first confidence by the first terminal side device. Details are not described herein again.

When the second information includes the second confidence information, in an example, that the first terminal side device sends the first information to the cloud device may include: The first terminal side device sends the first information to the cloud device when the first confidence is greater than the second confidence.

In other words, the first information reported by the terminal side device to the cloud device is an update of the second information delivered by the cloud device, and an updated change status is reported to the cloud device only when a confidence of the updated change status is greater than a confidence of the unupdated change status.

From another perspective, in this implementation, related information of a same changed map element may be updated by using a plurality of terminal side devices or by performing detection by a terminal side device for a plurality of times, so that the cloud device can obtain more precise related information of the same changed map element. In addition, more precise updated information is ensured, so that the cloud device can obtain more precise map information when updating the target map based on the related information of the map element.

In still another implementation of this embodiment, the second information may include not only the first confidence radius information, but also the first confidence information.

In another implementation of obtaining the second information in this application, the method may include: The cloud device receives third information from the second terminal side device, and the cloud device receives fourth information from a third terminal side device. The third information includes third indication information, and the third indication information indicates change information of a map element at a third location on the target map (for example, indicates that the map element at the third location changes to the first map element). The fourth information includes fourth indication information, and the fourth indication information indicates change information of a map element at a fourth location on the target map (for example, indicates that the map element at the fourth location changes to the first map element). The cloud device obtains the second information based on the third information and the fourth information.

In an implementation in which the cloud device obtains the second information based on the third information and the fourth information, the cloud device may calculate the second location based on the third location and the fourth location, and then generate the second information based on the second location. For example, weighting processing is performed on the third location and the fourth location, to obtain the second location, and the second information is further generated.

In another implementation in which the cloud device obtains the second information based on the third information and the fourth information, the third information further includes third confidence radius information, and the fourth information further includes fourth confidence radius information.

In this case, if the cloud device determines that the third location is located in a circular area with the fourth location as the center and the fourth confidence radius as the radius, and/or the fourth location is located in a circular area with the third location as the center and the third confidence radius as the radius, the cloud device generates the second information based on the third information and the fourth information.

In this way, it is ensured that a first map element indicated by the third information and a first map element indicated by the fourth information are a same map element, to help improve precision of map update information, and further help improve precision of the updated target map.

In still another implementation in which the cloud-side device obtains the second information based on the third information and the fourth information, the third information may further include third confidence information. Likewise, the fourth information may further include fourth confidence information. The third confidence information indicates a third confidence of the third indication information, and the fourth confidence information indicates a fourth confidence of the fourth indication information.

In this case, in an example, the cloud device may generate the second information based on the third information and the fourth information only when determining that both the third confidence and the fourth confidence are greater than or equal to the preset confidence threshold.

In this case, in another example, the cloud device may generate the second location based on the third confidence, the fourth confidence, the third location, and the fourth location. For example, the cloud device may use the third confidence as a weight value of the third location, use the fourth confidence as a weight value of the fourth location, and perform weighting processing on the third location and the fourth location, to obtain the second location.

It may be understood that the method shown in FIG. 3 is described by using the terminal side device and the cloud device as execution bodies. However, execution bodies of the method shown in FIG. 3 are not limited to the terminal side device and the cloud device. For example, any execution body in the method shown in FIG. 3 may be a chip. In an example, in the manner shown in FIG. 3, the terminal side device may be replaced with a chip that can be used in the terminal side device, and the cloud device may be replaced with a chip that can be used in the cloud device.

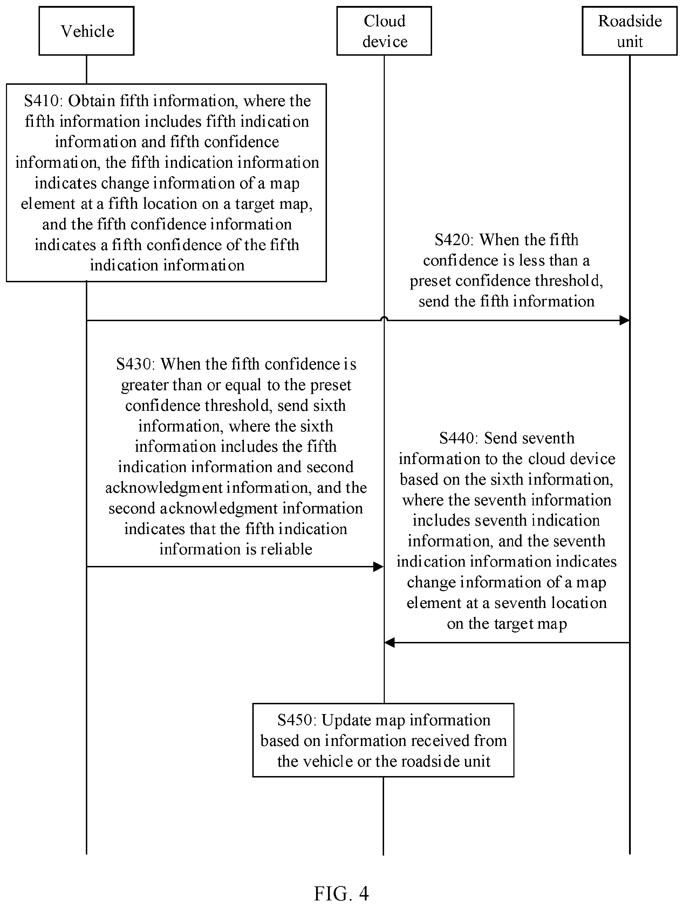

FIG. 4 is a flowchart of an example of a map update method according to still another embodiment of this application. The method may include S410, S420, S430, S440, and S450.

S410: A vehicle obtains fifth information, where the fifth information includes fifth indication information and fifth confidence information, the fifth indication information indicates change information of a map element at a fifth location on a target map, and the fifth confidence information indicates a fifth confidence of the fifth indication information.

An example of the fifth indication information specifically indicates that the map element at the fifth location changes to a second map element.

For an implementation in which the vehicle obtains the fifth information, refer to the foregoing implementation in which the first terminal side device obtains the first information. Details are not described herein again.

S420: When the fifth confidence is less than a preset confidence threshold, the vehicle sends the fifth information to a roadside unit.

S430: When the fifth confidence is greater than or equal to the preset confidence threshold, the vehicle sends sixth information to a cloud device, where the sixth information includes the fifth indication information and second acknowledgment information, and the second acknowledgment information indicates that the fifth indication information is reliable. Correspondingly, the cloud device receives the sixth information.

S440: The roadside unit sends seventh information to the cloud device based on the sixth information, where the seventh information includes seventh indication information, and the seventh indication information indicates change information of a map element at a seventh location on the target map.

Optionally, the roadside unit may obtain a sixth confidence, and may send third acknowledgment information to the cloud device when the sixth confidence is greater than or equal to the preset confidence threshold. The third acknowledgment information indicates that the seventh indication information is reliable. When the sixth confidence is less than the preset confidence threshold, the roadside unit sends sixth confidence information to the cloud device. The sixth confidence information indicates a seventh confidence of the seventh indication information.

S450: The cloud device updates map information based on information received from the vehicle or the roadside unit.

If the cloud device receives the fifth information, the cloud device may update the target map based on the fifth information. If the cloud device receives the seventh information, and the seventh information includes the third acknowledgment information, the cloud device may update the target map based on the seventh information. If the cloud device receives the seventh information, and the seventh information does not include the third acknowledgment information, the cloud device may use the seventh information as the third information or the fourth information, use the second map element as the first map element, and perform an operation of obtaining the second information, so that another terminal side device updates a location of the second map element until the location of the second map element is reliable.

In this implementation, when the first confidence is less than a preset threshold, the first indication information and the first confidence information are sent to the roadside unit, so that the roadside unit further detects a change status of the first map element based on these information, to obtain more precise change information.

From another perspective, the vehicle and the roadside unit cooperate with each other to update map information, so that respective advantages of the vehicle and the roadside unit can be fully utilized to implement map update. In addition, considering limitation of a channel transmission resource, especially an uplink transmission resource, cooperative work of the vehicle and the roadside unit can avoid repeated transmission of same information, so that utilization of channel resources of the vehicle and the roadside unit can be improved.

It may be understood that the method shown in FIG. 4 is described by using the vehicle, the roadside unit, and the cloud device as execution bodies. However, execution bodies of the method shown in FIG. 4 are not limited to the vehicle, the roadside unit, and the cloud device. For example, any execution body in the method shown in FIG. 4 may be a chip. In an example, in the manner shown in FIG. 4, the vehicle may be replaced with a chip that can be used in the vehicle, the cloud device may be replaced with a chip that can be used in the cloud device, and the roadside unit may be replaced with a chip that can be used in the roadside unit.

Similar to the first information, when any information in the second information to the seventh information in the foregoing embodiments of this application includes a plurality of types of information, the plurality of types of information may be carried in a same message, or may be carried in different messages.

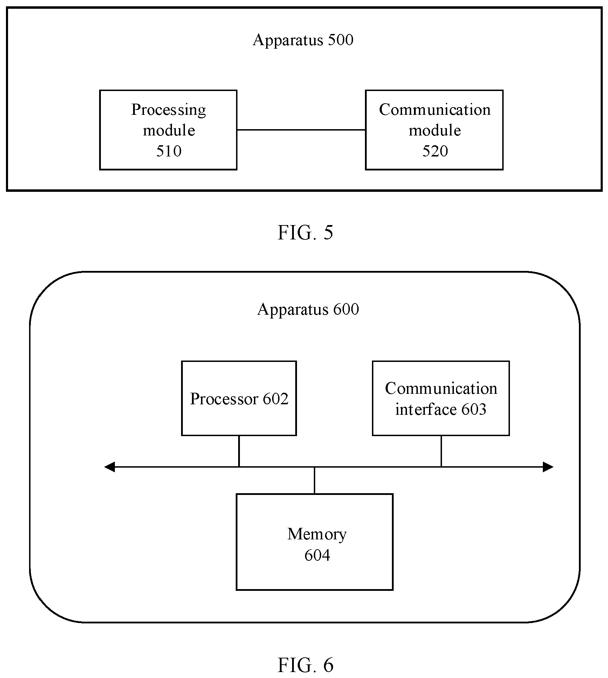

FIG. 5 is a schematic diagram of a structure of a map update apparatus 500 according to an embodiment of this application. The apparatus 500 may include a processing module 510 and a communication module 520. The processing module 510 may perform a related operation or step by using a processor, and the communication module 520 may perform a related operation or step by using a transceiver or a communication interface.

In some examples, the apparatus 500 is an apparatus configured to perform related steps or operations performed by the terminal side device in the method shown in FIG. 2, FIG. 3, or FIG. 4. In this example, the processing module 510 may be configured to perform S210, and the communication module 520 may be configured to perform S220; or the processing module 510 may be configured to perform S210, and the communication module 520 may be configured to perform S220 and S310; or the processing module 510 may be configured to perform S410, and the communication module 520 may be configured to perform S420 and S430.

In some other examples, the apparatus 500 is an apparatus configured to perform related steps or operations performed by the cloud device in the method shown in FIG. 2, FIG. 3, or FIG. 4. In this example, the processing module 510 may be configured to perform S230, and the communication module 520 may be configured to perform S220; or the processing module 510 may be configured to perform S305 and S230, and the communication module 520 may be configured to perform S220 and S310; or the processing module 510 may be configured to perform S450, and the communication module 520 may be configured to perform S440 and S430.

In some other examples, the apparatus 500 is an apparatus configured to perform related steps or operations performed by the roadside unit in the method shown in FIG. 4. In this example, the processing module 510 may be configured to perform S230, and the communication module 520 may be configured to perform S220, or the processing module 510 and the communication module 520 may be configured to perform S420 and S440.

FIG. 6 is a schematic diagram of a structure of a map update apparatus 600 according to an embodiment of this application. The apparatus 600 includes a processor 602, a communication interface 603, and a memory 604.

In some examples, the apparatus 600 may be an example structure of the terminal side device in any one of FIG. 2 to FIG. 4, or may be an example structure of a chip that can be used in the terminal side device. In this example, the apparatus 600 may be configured to perform the steps or operations performed by the terminal side device in the method shown in any one of FIG. 2 to FIG. 4.

In some other examples, the apparatus 600 may be an example structure of the cloud device in any one of FIG. 2 to FIG. 4, or may be an example structure of a chip that can be used in the cloud device. In this example, the apparatus 600 may be configured to perform the steps or operations performed by the cloud device in the method shown in any one of FIG. 2 to FIG. 4.

In some other examples, the apparatus 600 may be an example structure of the roadside unit in FIG. 4, or may be an example structure of a chip that can be used in the roadside unit. In this example, the apparatus 600 may be configured to perform the steps or operations performed by the roadside unit in the method shown in FIG. 4.

The processor 602, the memory 604, and the communication interface 603 may communicate with each other through a bus. The memory 604 stores executable code. The processor 602 reads the executable code in the memory 604 to perform a corresponding method. The memory 604 may further include another software module, such as an operating system, used for running a process. The operating system may be Linux™, Unix™, Windows™, or the like.

For example, the executable code in the memory 604 is used to implement a step or an operation performed by the terminal side device in the method shown in any one of FIG. 2 to FIG. 4. The processor 602 reads the executable code in the memory 604 and runs the code, to perform a corresponding step or operation.

For another example, the executable code in the memory 604 is used to implement a step or an operation performed by the cloud device in the method shown in any one of FIG. 2 to FIG. 4. The processor 602 reads the executable code in the memory 604 and runs the code, to perform a corresponding step or operation.

For another example, the executable code in the memory 604 is used to implement a step or an operation performed by the roadside unit in the method shown in FIG. 4. The processor 602 reads the executable code in the memory 604 and runs the code, to perform a corresponding step or operation.

The processor 602 may be a CPU. The memory 604 may include a volatile memory (volatile memory), for example, a random access memory (random access memory, RAM). The memory 604 may further include a non-volatile memory (non-volatile memory, NVM), for example, a read-only memory (read-only memory, ROM), a flash memory, a hard disk drive (hard disk drive, HDD), or a solid state initiator (solid state disk, SSD).

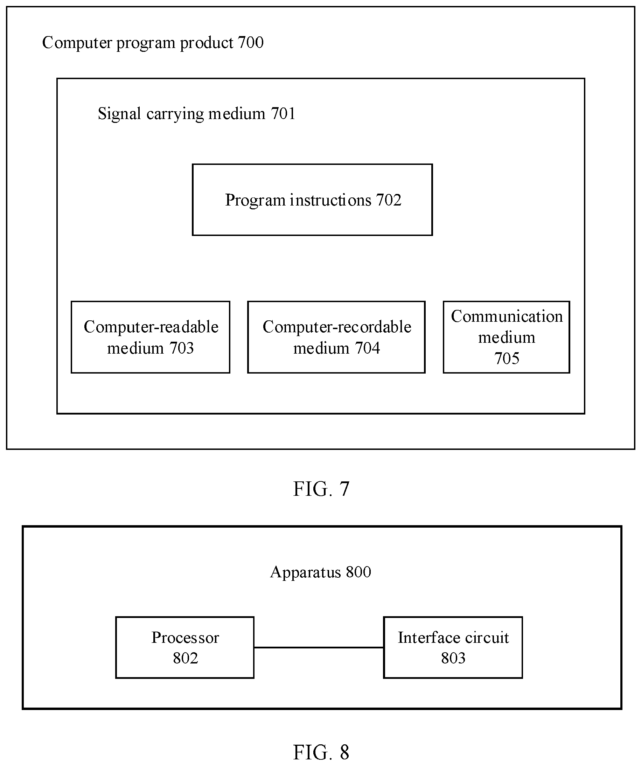

In some embodiments of this application, the disclosed methods may be implemented as computer program instructions encoded in a machine-readable format on a computer-readable storage medium or encoded on another non-transitory medium or product. FIG. 7 schematically shows a conceptual partial view of an example computer program product arranged according to at least some embodiments shown herein, and the example computer program product includes a computer program for executing a computer process on a computing device. In an embodiment, an example computer program product 700 is provided by using a signal carrying medium 701. The signal carrying medium 701 may include one or more program instructions 702. When the one or more program instructions 702 are run by one or more processors, the functions or some of the functions described in the method shown in any one of FIG. 2 to FIG. 4 may be provided. For example, in the embodiment shown in FIG. 2, one or more features of S210 and S220 may be carried by one or more instructions associated with the signal carrying medium 701.

In some examples, the signal carrying medium 701 may include a computer-readable medium 703, for example, but not limited to, a hard disk drive, a compact disc (CD), a digital video disc (DVD), a digital tape, a memory, a read-only memory (read-only memory, ROM), a random access memory (random access memory, RAM), or the like. In some implementations, the signal carrying medium 701 may include a computer-recordable medium 704, such as but not limited to a memory, a read/write (R/W) CD, an R/W DVD, and the like. In some implementations, the signal carrying medium 701 may include a communication medium 705, for example, but is not limited to a digital and/or analog communication medium (for example, an optical fiber cable, a waveguide, a wired communication link, or a wireless communication link). Thus, for example, the signal carrying medium 701 may be communicated by using the communication medium 705 in a wireless manner (for example, a wireless communication medium complying with the IEEE 802.11 standard or another transmission protocol). The one or more program instructions 702 may be, for example, a computer-executable instruction or a logical implementation instruction. In some examples, a computing device described above may be configured to provide various operations, functions, or actions in response to the program instructions 702 that are communicated to the computing device by using one or more of the computer-readable medium 703, and/or the computer-recordable medium 704, and/or the communication medium 705. It should be understood that the arrangement described herein is merely used as an example. Therefore, it may be understood by a person skilled in the art that other arrangements and other elements (for example, machines, interfaces, functions, sequences, and groups of functions) can be used instead, and that some elements may be omitted together based on an expected result. In addition, many of the described elements are functional entries that can be implemented as discrete or distributed components, or implemented in any suitable combination at any suitable position in combination with another component.

FIG. 8 is a schematic diagram of a structure of an apparatus 800 according to an embodiment of this application. The apparatus 800 includes a processor 802 and an interface circuit 803. The processor 802 reads instructions in the memory through the interface circuit 803, and executes the read instructions to implement a method corresponding to the instructions. Optionally, the apparatus 800 may further include a memory.

In some examples, the processor 802 reads the instructions in the memory through the interface circuit 803, and executes the read instructions to implement the method implemented by the terminal side device in FIG. 2 or FIG. 3, or implement the method implemented by the vehicle in FIG. 4.

In some other examples, the processor 802 reads the instructions in the memory through the interface circuit 803, and executes the read instructions to implement the method implemented by the cloud device in FIG. 2, FIG. 3, or FIG. 4.

In some other examples, the processor 802 reads the instructions in the memory through the interface circuit 803, and executes the read instructions to implement the method implemented by the roadside unit in FIG. 4.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of the embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be, for example, a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A map update method, performed by a terminal side device, the method comprising:

    receiving sensing information from a sensor, wherein the sensing information indicates data collected by the sensor; and
    receiving second information from a cloud device; and
    sending first information to the cloud device based on the sensing information and the second information,
    wherein the first information comprises first indication information, and the first indication information indicates change information of a map element at a first location on a target map,
wherein the second information comprises second indication information,
wherein the second indication information includes second location information, and the second location information indicates the second location, and wherein the second indication information indicates change information of a map element at a second location on the target map, wherein a distance between the second location and the first location is less than or equal to a distance threshold,
wherein the second information further comprises second confidence radius information, the second confidence radius information indicates a second confidence radius, wherein the second confidence radius is the maximum distance of the horizontal and vertical distances between the second location and two closest reference locations on the target map, wherein the horizontal and the vertical coordinates of the two reference locations are located on two sides of the second location,
and the reference location is a location of a preset map element on the target map, and
wherein the sending the first information to the cloud device based on the sensing information and the second information comprises:
sending the first information to the cloud device when the first location is located in a circular area with the second location as the center and the second confidence radius as the radius.

2. The method according to claim 1, wherein the first information further comprises first confidence information, and the first confidence information indicates a first confidence of the first indication information.

3. The method according to claim 1 or 2, wherein the first information further comprises first confidence radius information, the first confidence radius information indicates a first confidence radius, the first confidence radius is the maximum distance of the horizontal and vertical distances between the first location and two closest reference locations on the target map, wherein the horizontal and the vertical coordinates of the two reference locations are located on two sides of the first location, and the reference location is a location of a preset map element on the target map.

4. The method according to any one of claims 1 to 3, wherein the second information further comprises second confidence information, and the second confidence information indicates a second confidence of the second indication information; and

the sending the first information to the cloud device based on the second information comprises:
sending the first information to the cloud device when the first confidence is greater than the second confidence.

5. The method according to claim 1, wherein when the first confidence of the first indication information is greater than or equal to a first preset confidence threshold, the first information further comprises first acknowledgment information, and the first acknowledgment information indicates that the first indication information is reliable.

6. The method according to claim 5, wherein the method is performed by a vehicle, and the method further comprises:
when the first confidence is less than a second preset confidence threshold, sending the first indication information and the first confidence information to a roadside unit, wherein the first confidence information indicates the first confidence.

7. A map update method, performed by a cloud device, the method comprising:

receiving first information from a first terminal side device, wherein the first information comprises first indication information, and the first indication information indicates change information of a map element at a first location on a target map; and
updating the target map based on the first information,
wherein, before the receiving first information from a first terminal side device, the method further comprises:

obtaining second information, wherein the second information comprises second indication information, wherein the second indication information includes second location information, and the second location information indicates the second location, and wherein the second indication information indicates change information of a map element at a second location on the target map, wherein a distance between the second location and the first location is less than or equal to a distance threshold; and
sending the second information to the first terminal side device,
wherein the second information further comprises second confidence radius information, the second confidence radius information indicates a second confidence radius, wherein the second confidence radius is the maximum distance of the horizontal and vertical distances between the second location and two closest reference locations on the target map, wherein the horizontal and the vertical coordinates of the two reference locations are located on two sides of the second location, and the reference location is a location of a preset reference map element on the target map.

8. The method according to claim 7, wherein the first information further comprises first confidence information, and the first confidence information indicates a first confidence of the first indication information.

9. The method according to claim 8, wherein the first confidence is less than a preset confidence threshold, and the updating the target map based on the first information comprises:

sending request information to a roadside unit, wherein the request information is used to request the roadside unit to obtain a change status of a map element, and a distance between the roadside unit and the first location is less than or equal to a preset distance threshold;
receiving the change status from the roadside unit; and
updating the target map based on the change status.

10. The method according to claim 7, wherein the first information further comprises first confidence radius information, the first confidence radius information indicates a first confidence radius, the first confidence radius is the maximum distance of the horizontal and vertical distances between the first location and two closest reference locations on the target map, wherein the horizontal and the vertical coordinates of the two reference locations are located on two sides of the first location, and the reference location is a location of a preset reference map element on the target map.

11. The method according to any one of claims 7 to 10, wherein the second information further comprises second confidence information, and the second confidence information indicates a second confidence of the second indication information.

12. The method according to claim 7, wherein when the first confidence of the first indication information is greater than or equal to a first preset confidence threshold, the first information further comprises first acknowledgment information, and the first acknowledgment information indicates that the first indication information is reliable.

13. A map update apparatus, comprising a processor, wherein the processor is coupled to a memory;

the memory is configured to store instructions; and

the processor is configured to execute the instructions stored in the memory, so that the map update apparatus implements the method according to any one of claims 1 to 12.

14. A computer-readable medium, comprising instructions, wherein when the instructions are executed on a processor, the processor is enabled to implement the method according to any one of claims 1 to 12.

15. A map update system, wherein the map update system comprises a terminal side device configured to implement the method according to any one of claims 1 to 6, and a cloud device configured to implement the method according to any one of claims 7 to 12.

**Patentansprüche**

1. Kartenaktualisierungsverfahren, das durch eine endgerätseitige Einrichtung durchgeführt wird, wobei das Verfahren Folgendes umfasst:

Empfangen von Sensorinformationen von einem Sensor, wobei die Sensorinformationen durch den Sensor erfasste Daten angeben; und Empfangen von zweiten Informationen von einer Cloud-Einrichtung; und

Senden von ersten Informationen an die Cloud-Einrichtung basierend auf den Sensorinformationen und den zweiten Informationen, wobei die ersten Informationen erste Angabeinformationen umfassen und die ersten Angabeinformationen Änderungsinformationen eines Kartenelements an einem ersten Standort auf einer Zielkarte angeben,

wobei die zweiten Informationen zweite Angabeinformationen umfassen, wobei die zweiten Angabeinformationen zweite Standortinformationen beinhalten und die zweiten Standortinformationen den zweiten Standort angeben und wobei die zweiten Angabeinformationen Änderungsinformationen eines Kartenelements an einem zweiten Standort auf der Zielkarte angeben, wobei eine Entfernung zwischen dem zweiten Standort und dem ersten Standort kleiner als oder gleich einem Entfernungsschwellenwert ist,

wobei die zweiten Informationen ferner zweite Konfidenzradiusinformationen umfassen und die zweiten Konfidenzradiusinformationen einen zweiten Konfidenzradius angeben, wobei der zweite Konfidenzradius die maximale Entfernung der horizontalen und vertikalen Entfernungen zwischen dem zweiten Standort und zwei nächstgelegenen Referenzstandorten auf der Zielkarte ist, wobei sich die horizontalen und vertikalen Koordinaten der beiden Referenzstandorte auf zwei Seiten des zweiten Standorts befinden, und der Referenzstandort ein Standort eines voreingestellten Kartenelements auf der Zielkarte ist und

wobei das Senden der ersten Informationen an die Cloud-Einrichtung basierend auf den Sensorinformationen und den zweiten Informationen Folgendes umfasst:

Senden der ersten Informationen an die Cloud-Einrichtung, wenn sich der erste Standort in einem kreisförmigen Bereich mit dem zweiten Standort als Mittelpunkt und dem zweiten Konfidenzradius als Radius befindet.

2. Verfahren nach Anspruch 1, wobei die ersten Informationen ferner erste Konfidenzinformationen umfassen und die ersten Konfidenzinformationen eine erste Konfidenz der ersten Angabeinformationen angeben.

3. Verfahren nach Anspruch 1 oder 2, wobei die ersten Informationen ferner erste Konfidenzradiusinformationen umfassen und die ersten Konfidenzradiusinformationen einen ersten Konfidenzradius angeben, wobei der erste Konfidenzradius die maximale Entfernung der horizontalen und vertikalen Entfernungen zwischen dem ersten Standort und zwei nächstgelegenen Referenzstandorten auf der Zielkarte ist, wobei sich die horizontalen und vertikalen Koordinaten der beiden Referenzstandorte auf zwei Seiten des ersten Standorts befinden, und der Referenzstandort ein Standort eines voreingestellten Kartenelements auf der Zielkarte ist.

4. Verfahren nach einem der Ansprüche 1 bis 3, wobei die zweiten Informationen ferner zweite Konfidenzinformationen umfassen und die zweiten Konfidenzinformationen eine zweite Konfidenz der zweiten Angabeinformationen angeben; und

das Senden der ersten Informationen an die Cloud-Einrichtung basierend auf den zweiten Informationen Folgendes umfasst:

Senden der ersten Informationen an die Cloud-Einrichtung, wenn die erste Konfidenz größer als die zweite Konfidenz ist.

5. Verfahren nach Anspruch 1, wobei, wenn die erste Konfidenz der ersten Angabeinformationen größer als oder gleich einem ersten voreingestellten Konfidenzschwellenwert ist, die ersten Informationen ferner erste Bestätigungsinformationen umfassen und die ersten Bestätigungsinformationen angeben, dass die ersten Angabeinformationen zuverlässig sind.

6. Verfahren nach Anspruch 5, wobei das Verfahren durch ein Fahrzeug durchgeführt wird und das Verfahren ferner Folgendes umfasst:
wenn die erste Konfidenz kleiner als ein zweiter voreingestellter Konfidenzschwellenwert ist, Senden der ersten Angabeinformationen und der ersten Konfidenzinformationen an eine Straßenrandeinheit, wobei die ersten Konfidenzinformationen die erste Konfidenz angeben.

7. Kartenaktualisierungsverfahren, das durch eine Cloud-Einrichtung durchgeführt wird, wobei das Verfahren Folgendes umfasst:

Empfangen von ersten Informationen von einer ersten endgerätseitigen Einrichtung, wobei die ersten Informationen erste Angabeinformationen umfassen und die ersten Angabeinformationen Änderungsinformationen eines Kartenelements an einem ersten Standort auf einer Zielkarte angeben; und
Aktualisieren der Zielkarte basierend auf den ersten Informationen,
wobei das Verfahren vor dem Empfangen von ersten Informationen von einer ersten endgerätseitigen Einrichtung ferner Folgendes umfasst:

Erlangen von zweiten Informationen, wobei die zweiten Informationen zweite Angabeinformationen umfassen, wobei die zweiten Angabeinformationen zweite Standortinformationen beinhalten und die zweiten Standortinformationen den zweiten Standort angeben und wobei die zweiten Angabeinformationen Änderungsinformationen eines Kartenelements an einem zweiten Standort auf der Zielkarte angeben, wobei eine Entfernung zwischen dem zweiten Standort und dem ersten Standort kleiner als oder gleich einem Entfernungsschwellenwert ist; und
Senden der zweiten Informationen an die erste endgerätseitige Einrichtung,
wobei die zweiten Informationen ferner zweite Konfidenzradiusinformationen umfassen und die zweiten Konfidenzradiusinformationen einen zweiten Konfidenzradius angeben, wobei der zweite Konfidenzradius die maximale Entfernung der horizontalen und vertikalen Entfernungen zwischen dem zweiten Standort und zwei nächstgelegenen Referenzstandorten auf der Zielkarte ist, wobei sich die horizontalen und vertikalen Koordinaten der beiden Referenzstandorte auf zwei Seiten des zweiten Standorts befinden, und der Referenzstandort ein Standort eines voreingestellten Referenzkartenelements auf der Zielkarte ist.

8. Verfahren nach Anspruch 7, wobei die ersten Informationen ferner erste Konfidenzinformationen umfassen und die ersten Konfidenzinformationen eine erste Konfidenz der ersten Angabeinformationen angeben.

9. Verfahren nach Anspruch 8, wobei die erste Konfidenz kleiner als ein voreingestellter Konfidenzschwellenwert ist und das Aktualisieren der Zielkarte basierend auf den ersten Informationen Folgendes umfasst:

Senden von Anforderungsinformationen an eine Straßenrandeinheit, wobei die Anforderungsinformationen verwendet werden, um anzufordern, dass die Straßenrandeinheit einen Änderungsstatus eines Kartenelements erlangt, und eine Entfernung zwischen der Straßenrandeinheit und dem ersten Standort kleiner als oder gleich einem voreingestellten Entfernungsschwellenwert ist;
Empfangen des Änderungsstatus von der Straßeneinheit; und
Aktualisieren der Zielkarte basierend auf dem Änderungsstatus.

10. Verfahren nach Anspruch 7, wobei die ersten Informationen ferner erste Konfidenzradiusinformationen umfassen und die ersten Konfidenzradiusinformationen einen ersten Konfidenzradius angeben, wobei der erste Konfidenzradius die maximale Entfernung der horizontalen und vertikalen Entfernungen zwischen dem ersten Standort und zwei nächstgelegenen Referenzstandorten auf der Zielkarte ist, wobei sich die horizontalen und vertikalen Koordinaten der beiden Referenzstandorte auf zwei Seiten des ersten Standorts befinden, und der Referenzstandort ein Standort eines voreingestellten Referenzkartenelements auf der Zielkarte ist.

11. Verfahren nach einem der Ansprüche 7 bis 10, wobei die zweiten Informationen ferner zweite Konfidenzinformationen umfassen und die zweiten Konfidenzinformationen eine zweite Konfidenz der zweiten Angabeinformationen angeben.

12. Verfahren nach Anspruch 7, wobei, wenn die erste Konfidenz der ersten Angabeinformationen größer als oder gleich einem ersten voreingestellten Konfidenzschwellenwert ist, die ersten Informationen ferner erste Bestätigungsinformationen umfassen und die ersten Bestätigungsinformationen angeben, dass die ersten Angabeinformationen zuverlässig sind.

**13.** Kartenaktualisierungsvorrichtung, umfassend einen Prozessor, wobei der Prozessor an einen Speicher gekoppelt ist; der Speicher zum Speichern von Anweisungen konfiguriert ist; und der Prozessor dazu konfiguriert ist, die Anweisungen, die in dem Speicher gespeichert sind, auszuführen, sodass die Kartenaktualisierungsvorrichtung das Verfahren nach einem der Ansprüche 1 bis 12 umsetzt.

**14.** Computerlesbares Medium, das Anweisungen umfasst, wobei, wenn die Anweisungen auf einem Prozessor ausgeführt werden, der Prozessor in die Lage versetzt wird, das Verfahren nach einem der Ansprüche 1 bis 12 umzusetzen.

**15.** Kartenaktualisierungssystem, wobei das Kartenaktualisierungssystem eine endgerätseitige Einrichtung, die dazu konfiguriert ist, das Verfahren nach einem der Ansprüche 1 bis 6 umzusetzen, und eine Cloud-Einrichtung, die dazu konfiguriert ist, das Verfahren nach einem der Ansprüche 7 bis 12 umzusetzen, umfasst.

## Revendications

**1.** Procédé de mise à jour de carte, mis en œuvre par un dispositif côté terminal, le procédé comprenant :

la réception d'informations de détection provenant d'un capteur, dans lequel les informations de détection indiquent des données collectées par le capteur ; et
la réception de secondes informations provenant d'un dispositif en nuage ; et
l'envoi de premières informations au dispositif en nuage sur la base des informations de détection et des secondes informations, dans lequel les premières informations comprennent des premières informations d'indication, et les premières informations d'indication indiquent des informations de changement d'un élément de carte à un premier emplacement sur une carte cible, dans lequel les secondes informations comprennent des secondes informations d'indication, dans lequel les secondes informations d'indication comportent des secondes informations d'emplacement, et les secondes informations d'emplacement indiquent le second emplacement, et dans lequel les secondes informations d'indication indiquent des informations de changement d'un élément de carte à un second emplacement sur la carte cible, dans lequel une distance entre le second emplacement et le premier emplacement est inférieure ou égale à un seuil de distance, dans lequel les secondes informations comprennent également des secondes informations de rayon de confiance, les secondes informations de rayon de confiance indiquent un second rayon de confiance, dans lequel le second rayon de confiance est la distance maximale des distances horizontale et verticale entre le second emplacement et deux emplacements de référence les plus proches sur la carte cible, dans lequel les coordonnées horizontales et verticales des deux emplacements de référence sont situées sur deux côtés du second emplacement,
et l'emplacement de référence est un emplacement d'un élément de carte prédéfini sur la carte cible, et
dans lequel l'envoi des premières informations au dispositif en nuage sur la base des informations de détection et des secondes informations comprend :
l'envoi des premières informations au dispositif en nuage lorsque le premier emplacement est situé dans une zone circulaire avec le second emplacement comme centre et le second rayon de confiance comme rayon.

**2.** Procédé selon la revendication 1, dans lequel les premières informations comprennent également des premières informations de confiance, et les premières informations de confiance indiquent une première confiance des premières informations d'indication.

**3.** Procédé selon la revendication 1 ou 2, dans lequel les premières informations comprennent également des premières informations de rayon de confiance, les premières informations de rayon de confiance indiquent un premier rayon de confiance, le premier rayon de confiance est la distance maximale des distances horizontale et verticale entre le premier emplacement et deux emplacements de référence les plus proches sur la carte cible, dans lequel les coordonnées horizontales et verticales des deux emplacements de référence sont situées sur deux côtés du premier emplacement,
et l'emplacement de référence est un emplacement d'un élément de carte prédéfini sur la carte cible.

**4.** Procédé selon l'une quelconque des revendications 1 à 3, dans lequel les secondes informations comprennent également des secondes informations de confiance, et les secondes informations de confiance indiquent une seconde confiance des secondes informations d'indication ; et
l'envoi des premières informations au dispositif en nuage sur la base des secondes informations comprend :
l'envoi des premières informations au dispositif en nuage lorsque la première confiance est supérieure à la seconde confiance.

5. Procédé selon la revendication 1, dans lequel lorsque la première confiance des premières informations d'indication est supérieure ou égale à un premier seuil de confiance prédéfini, les premières informations comprennent également des premières informations d'accusé de réception, et les premières informations d'accusé de réception indiquent que les premières informations d'indication sont fiables.

6. Procédé selon la revendication 5, dans lequel le procédé est mis en œuvre par un véhicule, et le procédé comprend également :
lorsque la première confiance est inférieure à un second seuil de confiance prédéfini, l'envoi des premières informations d'indication et des premières informations de confiance à une unité de bord de route, dans lequel les premières informations de confiance indiquent la première confiance.

7. Procédé de mise à jour de carte, mis en œuvre par un dispositif en nuage, le procédé comprenant :

la réception de premières informations provenant d'un premier dispositif côté terminal, dans lequel les premières informations comprennent des premières informations d'indication, et les premières informations d'indication indiquent des informations de changement d'un élément de carte à un premier emplacement sur une carte cible ; et
la mise à jour de la carte cible sur la base des premières informations,
dans lequel, avant la réception des premières informations en provenance d'un premier dispositif côté terminal, le procédé comprend également :

l'obtention de secondes informations, dans lequel les secondes informations comprennent des secondes informations d'indication, dans lequel les secondes informations d'indication comportent des secondes informations d'emplacement, et les secondes informations d'emplacement indiquent le second emplacement, et dans lequel les secondes informations d'indication indiquent des informations de changement d'un élément de carte à un second emplacement sur la carte cible, dans lequel une distance entre le second emplacement et le premier emplacement est inférieure ou égale à un seuil de distance ; et
l'envoi des secondes informations au premier dispositif côté terminal,
dans lequel les secondes informations comprennent également des secondes informations de rayon de confiance, les secondes informations de rayon de confiance indiquent un second rayon de confiance, dans lequel le second rayon de confiance est la distance maximale des distances horizontale et verticale entre le second emplacement et deux emplacements de référence les plus proches sur la carte cible, dans lequel les coordonnées horizontales et verticales des deux emplacements de référence sont situées sur deux côtés du second emplacement,
et l'emplacement de référence est un emplacement d'un élément de carte de référence prédéfini sur la carte cible.

8. Procédé selon la revendication 7, dans lequel les premières informations comprennent également des premières informations de confiance, et les premières informations de confiance indiquent une première confiance des premières informations d'indication.

9. Procédé selon la revendication 8, dans lequel la première confiance est inférieure à un seuil de confiance prédéfini, et la mise à jour de la carte cible sur la base des premières informations comprend :

l'envoi d'informations de demande à une unité de bord de route, dans lequel les informations de demande sont utilisées pour demander à l'unité de bord de route d'obtenir un état de changement d'un élément de carte, et une distance entre l'unité de bord de route et le premier emplacement est inférieure ou égale à un seuil de distance prédéfini ;
la réception de l'état de changement en provenance de l'unité de bord de route ; et
la mise à jour de la carte cible sur la base de l'état de changement.

10. Procédé selon la revendication 7, dans lequel les premières informations comprennent également des premières informations de rayon de confiance, les premières informations de rayon de confiance indiquent un premier rayon de confiance, le premier rayon de confiance est la distance maximale des distances horizontale et verticale entre le premier emplacement et deux emplacements de référence les plus proches sur la carte cible, dans lequel les coordonnées horizontales et verticales des deux emplacements de référence sont situées sur deux côtés du premier emplacement,
et l'emplacement de référence est un emplacement d'un élément de carte de référence prédéfini sur la carte cible.

**11.** Procédé selon l'une quelconque des revendications 7 à 10, dans lequel les secondes informations comprennent également des secondes informations de confiance, et les secondes informations de confiance indiquent une seconde confiance des secondes informations d'indication.

**12.** Procédé selon la revendication 7, dans lequel lorsque la première confiance des premières informations d'indication est supérieure ou égale à un premier seuil de confiance prédéfini, les premières informations comprennent également des premières informations d'accusé de réception, et les premières informations d'accusé de réception indiquent que les premières informations d'indication sont fiables.

**13.** Appareil de mise à jour de carte, comprenant un processeur, dans lequel le processeur est couplé à une mémoire ;
la mémoire est configurée pour stocker des instructions ; et le processeur est configuré pour exécuter les instructions stockées dans la mémoire, de sorte que l'appareil de mise à jour de carte met en œuvre le procédé selon l'une quelconque des revendications 1 à 12.

**14.** Support lisible par ordinateur, comprenant des instructions, dans lequel lorsque les instructions sont exécutées sur un processeur, le processeur est activé pour mettre en œuvre le procédé selon l'une quelconque des revendications 1 à 12.

**15.** Système de mise à jour de carte, dans lequel le système de mise à jour de carte comprend un dispositif côté terminal configuré pour mettre en œuvre le procédé selon l'une quelconque des revendications 1 à 6, et un dispositif en nuage configuré pour mettre en œuvre le procédé selon l'une quelconque des revendications 7 à 12.

FIG. 1

First terminal side device

Cloud device

S210: Receive sensing information from a sensor, where the sensing information indicates data collected by the sensor

S220: Send first information to the cloud device based on the sensing information, where the first information includes first indication information, and the first indication information indicates change information of a map element at a first location on a target map

S230: Update the target map based on the first information

FIG. 2

First terminal
side device

Cloud
device

S202: Obtain second information, where the second
information includes second indication information,
and the second indication information indicates
change information of a map element at a second
location on a target map

S204: Send the second information

S210: Receive sensing information
from a sensor, where the sensing
information indicates data collected
by the sensor

S220: Send first information to the cloud device based
on the sensing information, where the first information
includes first indication information, and the first
indication information indicates change information of a
map element at a first location on the target map

S230: Update the target
map based on the first
information

FIG. 3

| Vehicle | Cloud device | Roadside unit |
|---|---|---|

S410: Obtain fifth information, where the fifth information includes fifth indication information and fifth confidence information, the fifth indication information indicates change information of a map element at a fifth location on a target map, and the fifth confidence information indicates a fifth confidence of the fifth indication information

S420: When the fifth confidence is less than a preset confidence threshold, send the fifth information

S430: When the fifth confidence is greater than or equal to the preset confidence threshold, send sixth information, where the sixth information includes the fifth indication information and second acknowledgment information, and the second acknowledgment information indicates that the fifth indication information is reliable

S440: Send seventh information to the cloud device based on the sixth information, where the seventh information includes seventh indication information, and the seventh indication information indicates change information of a map element at a seventh location on the target map

S450: Update map information based on information received from the vehicle or the roadside unit

FIG. 4

Apparatus 500

| Processing module 510 | Communication module 520 |

FIG. 5

Apparatus 600

| Processor 602 | Communication interface 603 |

Memory 604

FIG. 6

Computer program product 700

Signal carrying medium 701

Program instructions 702

| Computer-readable medium 703 | Computer-recordable medium 704 | Communication medium 705 |

FIG. 7

Apparatus 800

| Processor 802 | Interface circuit 803 |

FIG. 8

**EP 4 198 452 B1**

**Patent documents cited in the description**

- WO 2018142394 A2